# EUROPEAN PATENT APPLICATION

(11) **EP 1 418 503 A1**
(43) Date of publication of application: **12.05.2004**
(21) Application number: 02024755.7
(22) Date of filing: 06.11.2002
(51) Int. Cl.: G06F 11/07, H04M 11/04

(54) **Security system for a computer network**

(71) Applicant: Dangaard Telecom RTC Division A/S, 6330 Padborg (DK)
(72) Inventor: Hansen, Johnny, 8464 Galten (DK)
(74) Representative: Nielsen, Leif

(57) **Abstract**

Security system for a computer network with a network server and a plurality of computers. The security system comprises a status probe in each computer, an evaluation system in the network server, and a modem coupled to the server. The status probe is programmed to provide status reports to the server in predetermined time intervals, the status reports containing digital data indicative of the states of selected components in the computer. The evaluation system is programmed to evaluate the received status reports in accordance with predetermined parameters to determine, whether any of the states of the selected components is in a failure state or in an acceptable state. In case that a component is in a failure state, a message is sent to a mobile telephone via the telephone modem.

## Description

### FIELD OF THE INVENTION

The present invention relates to security systems for computer networks and the notification of administrators during failure conditions in such networks.

### BACKGROUND OF THE INVENTION

In order to ensure proper functioning of computer network systems, it is of high interest that eventual errors or machine failures are corrected as fast as possible after detection. For this reason, operating systems for managing the operation of the network often are provided with routines that report failures to an administrator.

In US patent application No. 2002 091813 by Lamberton et al. a system is disclosed for surveillance of computer-like devices while they are connected to a communications network. Upon joining the communications network, a device is first required to log-in to Network Surveillance Server, after which, the Network Surveillance Server polls it while connected on the network so that an alarm can be issued, from the Network Surveillance Server, to a central surveillance unit, if the device fails responding to polling. Hence, prior to leaving the communications network, the computer-like device is also required to log-out to the Network Surveillance Server. Thus, as long as it is connected to the communications network, the computer-like device is watched. The system is intended for theft prevention. A missing poll response is interpreted as a disconnection of a computer, which may be checked by a telephone call to the owner, whether the computer actually has been removed without logging out.

This system does not report failures others than a missing polling response from a network connected computer. There is not taken into account other types of failures or the eventual failure of a server that is important to the operation of the network.

It is therefore the purpose of the invention to provide a security system which controls the network connected remote devices for failures other than a missing response from a polling action.

### DESCRIPTION / SUMMARY OF THE INVENTION

This purpose is achieved by a security system for a computer network as described in the independent claims. Further embodiments are described in the dependent claims and in the following description.

The invention concerns a security system for a computer network, the network comprising a network server functionally connected to a plurality of computers, the security system comprising
- a status probe in each of at least one of the computers,
- an evaluation system provided in the network server,
- a modem connected to a telephone network and functionally coupled to the server,
wherein
- the status probe is programmed to provide status reports to the server in predetermined time intervals, the status reports containing digital data indicative of the states of selected components in the computer,
- the evaluation system is programmed to evaluate the received status reports in accordance with predetermined parameters, programmed to determine, whether any of the states of the selected components is in a failure state or in an acceptable state, and programmed to send a message to a telephone via the telephone modem in case that a component is in a failure state.

The term computer has to be understood as a broad term including personal computers (PC), laptops, palm pilots, large computing devices, mail servers, backup systems and other devices. The network may be a LAN (local Area Network), for example Ethernet® , a WAN (Wide Area Netwok), or even the Internet.

According to the invention, one or more of the network connected computers are provided with a probe. Such a probe may be a hardware part, for example a programmed connected module in the computer. Preferably however, it may be software computer program that is installed in the computer and performs the steps according to the invention when run on the computer.

The evaluation system, as well, may be a hardware part, for example a programmed connected module in the server. Preferably however, it may be software computer program that is installed in the server and performs the steps according to the invention when run on the server. It should be noted that the main task of the evaluation system is an evaluating function, why this term has been chosen. However, as will become more apparent in the following, also other functions than evaluation may be performed by this system.

By having a probe on each of the network connected computers, each probe may be specially designed and programmed to report certain states of selected components. Thus, not every probe may report and be able to report the same status reports. What-the status report of a certain probe may contain may be programmed initially or be programmed, when the probe is installed. Also, such a probe may be configurable by commands from the server. For example, the evaluation system may change the configuration of the probe via the computer network in order to change the format and contents of the status report to be received. Such a configuration action may be initiated by a polling of the device in question.

It may further be arranged such that a software program is loaded onto the computer from the server, where this software program functions as the described probe. The latter is of great advantage, when a new computer is added to the computer network. When a new computer connection is established, the probe program may be loaded onto the computer and configured in accordance with certain parameters and programmed routines in the evaluation unit taking into account the specific components that the computer contains. For example, if the computer in question is a mail server without a display, there is no need for a status report to contain a line stating that no display device is present. Thereby, the necessary content and size of the status report is optimised.

In order to achieve a response from one of the connected computers, the monitored state may be determined on the basis of a response to a polling action, which is a well-known technique for testing connections. However, preferably, the status probe is programmed to provide status reports automatically. The latter is an advantage, because use of the computer network is minimised by avoiding polling actions.

In one embodiment the system comprises
- a control unit functionally coupled to the server and to the modem, wherein
- the server is programmed to send digital data signals in predetermined time interval to the control unit in order to confirm proper functioning of the server,
- the control unit is programmed to control, whether the digital data signals are received within the time intervals, and in case that a signal is not received, to send a message to a telephone via the telephone modem.

In this case, the server may send the digital data signal as a response to a polling action, for example a so called PING, from the control unit. However, in parallel to the above arguments, it is preferred that the server is sending the signals automatically. The automatic signalling may be governed by part of the evaluation system.

In another embodiment of the invention, the evaluation system is programmed, upon receipt of a status report indicating a failure state of a certain component, to compare the failure state with a list of possible known failure states with corresponding possible automatic recovery actions and in case that the failure state is equal to one or more of the predetermined failure states, to automatically select at least one possible recovery action for execution in order to change the failure state into an acceptable state. The one recovery action to be chosen among several possible may be in accordance with a priority list. Thus, it may have been established that certain recovery actions after a certain failure state may be successful in more cases than others. Therefore, if several recovery actions are possible, they may be listed in a priority order in which the recovery actions have to be tried. The order could be established as a result from a statistical investigation for occurrence of failures. A different priority list with another background approach may be used as well. In this case, the recovery action with the least influencing effect may be chosen first. If this does not succeed in a recovery, a second recovery action may be tried, until a recovery action has been found to change - if at all possible - the failure state into an acceptable state. The last recovery action to be tried may be a reboot of the computer in question.

This recovery may be made before a message is sent. In this case, it may be checked, whether the recovery action has resulted in a change of the failure state to an acceptable state, and if this is not the case, the message may be sent with an alert for the failure state. Thus, first after an automatic attempt to repair the failure state, a message is sent for alerting the person in charge, for example the operator or administrator, that the recovery action did not work. In many cases, a suitable recovery action may be successful and an additional action from service personnel may be avoided.

If the recovery action has resulted in a change of the failure state to an acceptable state, a recovery action report may be sent in the message. The person in charge may, thus, be informed about the failure, even though the failure has been overcome by a recovery action and changed into an acceptable state. Such a report for the person in charge may be important, because a repeating malfunction with a failure state, though recoverable, may demand - maybe not immediate action - but nevertheless action by the service personnel sooner or later.

In a further embodiment of the invention, the control unit is configured to send a message to a telephone via the telephone modem upon missing receipt of the digital data signal. If a signal from the server is not received by the control unit as it should, it indicates a malfunctioning of certain corresponding program in the server, corresponding components in the server, or the evaluation unit in the server, or it may indicate a general malfunctioning of the server, for example a major breakdown that requires a reboot, eventually by interrupting the electrical power for the server.

Therefore, the control unit may be configured to automatically reboot the server, if there is a missing signal from the server to the control unit. In order to provide a power interruption to the server, the control unit is functionally connected with a power source for the server and configured to interrupt the electrical power to the server for a certain time in order to reboot the server. This may be accomplished by functionally connecting the control unit to an electrical relay.

In an even further embodiment of the invention, the evaluation system or the control unit or both of them are programmed to periodically check whether a connection to the telephone network via the modem can be established and to send an alarm message to a selected remote device via the computer network in case that the modem is not working properly. In this way, the possibility to connect to the telephone network is checked periodically. A missing connection may indicate a malfunctioning modem, which then has to be exchanged or repaired in order to assure proper functioning of the security system according to the invention.

When errors have to be reported to a certain person, for example an administrator or repair personnel, it is important that the error message actually reaches this person. Problems arise in this connection, if the certain person is unable to answer the phone or access the computer to which an error message is sent. The reason may be of various nature, for example, the time for the message is in the evening, where the certain person has different activities which prevent the person to answer the phone immediately or to control an error message receiving computer continuously.

As a further purpose of the invention, it is intended to provide a system for network failure notification which assures reliable delivery of a message to a certain person including a high possibility of quick action without demanding that the person immediately answers a phone or immediately responds to a computer message.

Therefore, the invention foresees that the telephone modem is connected to a mobile telephone network and the telephone is a mobile telephone.

Using a mobile telephone for sending a message is advantageous as compared to normal telephones in that the mobile telephone opens the possibilities of delivering the message independently of the location of the addressed person - as long as the person carries the phone along and as long as the mobile phone is within a transmission area of the mobile telephone network, for example a GSM (Global System for Mobile Communications) network or a UMTS (Universal Mobile Telecommunications System) network or GPRS (General Packet Radio Service) network, if multi media messages are desired.

Also to be emphasised in this context is the fact that even though a message may not be delivered when the telephone is turned off or outside a telephone network transmission area, the message will be stored at the mobile telephone network server and be delivered as soon as the mobile telephone accesses the telephone network again. This implies great safety for actual delivery of the message as soon as possible.

Preferably, the message is sent as an SMS (Short Message Service) message or a MMS (Multimedia Messaging Service) message. Use of an SMS message or an MMS message or equivalents has a number of advantages. Firstly, it is not necessary for the addressed person to answer a phone call. That implies, that a message can be delivered, even in the case that the person is using the telephone for a conversation when such a message is delivered or the person is unable to answer a call. Also, if this person is in the middle of a long lasting conversation, the receipt of an SMS or MMS message is nevertheless indicated by the mobile telephone, for example with a beep, such that the person is alerted that something important has to be checked. In contrast to an incoming telephone call, which cannot be answered during this long lasting conversation and usually is not indicated, the person may now ask the other party of the conversation to take a short break in order to be able to check the received message. After checking of the message, the person may decide for the appropriate action to be taken, for example instantaneously. Therefore, the method according to the invention is more reliable than known methods and has a high probability of a quick action independently of an eventual long lasting conversation or inability to immediately answer a call.

Often, responsible persons have to be notified even in their spare time, because their action is important, though, only required if a failure actually occurs. The responsible person receiving the message may therefore be occupied with something of personal importance at the instance when a message is delivered. As the message delivery is not a phone call to be answered, but an SMS or MMS message accompanied by a modest indication, for example a beep from the mobile telephone, the person is alerted but not forced to immediately quit or pause this personally important occupation. Therefore, the method according to the invention also takes into consideration important human aspects, such that a person in charge may be more willing to accept immediate receipt of the message and take quick action even if it may be of slight inconvenience for the moment.

In order to foresee that a person may be asleep and not awakened by the slight beep after receipt of an SMS or MMS message, the evaluation system and the control unit may be programmed to place a call together with sending the message. In this case, the telephone may alert the receiver that a message is underway.

Furthermore, the person receiving the message also receives the address - in this case a telephone number - of the sending system. Thus, the person, for example the network administrator or repair personnel, may immediately recognise the sender of the message. For further ease, the telephone may be programmed to show not the telephone number only but in addition or instead a name of the corresponding network, for example "Hospital Network". The latter may be of great help, if the person is in charge of different networks or for different control units for the same network.

If the mobile telephone is capable of receiving and displaying e-mails, this option may be used instead of SMS or MMS messages. Likewise, comparable messages may substitute SMS messages.

As mentioned above, it may be that a connection cannot be established via the telephone network. In this case, the invention foresees that the still functioning computer network is used to transmit an alarm message, for example to the computer of repair personnel, or even to a different device, where SMS or MMS messages can be sent.

By sending a message as an SMS or MMS message, further advantages may be recognised. For example, it is possible to get a return message, that the original message indeed has been received. Therefore, in a further embodiment, the evaluation system or the control unit or both of them are programmed to check for the receipt of a confirmation that the SMS or MMS message has been delivered to the mobile telephone and in case of missing confirmation, to send a message via the computer network to a selected remote electronic device connected to the computer network. Alternatively, a further SMS or MMS may be sent to another predetermined mobile telephone number, eventually indicating in this further message that the receipt of the first message at the first telephone has not been confirmed.

For example, if the telephone of the person in charge is not turned on or outside a region covered by the network, a message cannot be delivered. In this case, an alert is sent to a different instance, for example a computer that may be reached in case that the computer network is still working. If the complete network is malfunctioning, for example because the main network server is not running, this option is not possible. However, it is of great advantage generally, that the delivery of the message is confirmed. If this is not the case, other actions may be performed, for example an automated recovery action as will be explained below.

Advantageously, the message comprises a failure code and a corresponding text string in a format which is equal to the format of error messages from the operating system of the network server.

Such a status report in the message may comprise a failure code and a corresponding text string in a format which is equivalent to the format of error messages from the operating system of the network, for example the well-known operating system Windows® or UNIX. This is advantageously because the person in charge may be used to special error messages from the operating system and may relate the necessary action faster and more focused if the error message received on the mobile telephone resembles the message normally received on the remote terminal in the office during daily work.

The evaluation system may in addition be programmed to be able to receive, after a reported failure state, an SMS or MMS message comprising commands for a recovery action.

In order to facilitate the work of the person in charge receiving the SMS or MMS message, the message may comprise proposals for commands for a recovery action. For example, the failure state may have been categorised as a certain type of failure. By comparing this type of failure with a list of known failures, a number of possible recovery action may be found in this list. These actions may be performed automatically due to a priority list, as mentioned before, but alternatively, sending of the message may be initiated with these possible recovery actions as proposals. Thus, the person in charge may choose among these recovery actions and decide which action to take first. With a return SMS or MMS message to the system performing the method according to the invention, the person in charge may send commands to be executed in order to repair the failure state.

However, it should be recognised, that it is also possible, that the evaluation system receives a command in general without the need of the report of a failure state.

As a safety factor, the evaluation system may be programmed to execute the received command only if the sending mobile telephone reveals its telephone number as an authorised number.

In order to protect the network and the components from execution of unauthorised commands, the inventions foresees, that a command is only executed if the sending mobile telephone reveals its telephone number as an authorised number. The notification unit may have several telephone numbers stored, such that only commands from SMS messages or MMS messages are accepted, which are send from telephones with these telephone numbers.

For further security, the evaluation system is programmed only to execute the received command if it is accompanied by a correct password. As an additional safety factor, the received command in a return message may only be executed if it is accompanied by a correct password. Such a password may an alphanumeric sequence sent from the contacting telephone, for example using DTMF tones from the keypad. Alternatively, a voice message may be used.

If messages are received by the programmed system for failure notification according to the invention, they may be stored in a database together with the telephone number of the sending telephone for later evaluation. This is advantageous in that actions performed by the system can be analysed later and related to eventual commands from an operator or administrator or repair personnel. It may also be that the command received by the system was not recognised as authorised and therefore not executed. However, also such commands are stored for later evaluation. Such evaluation may be important in order to find out, whether certain command or commands from certain telephones are not executed though they should have been executed. On the other hand, it may also be that such unauthorised commends have been sent as attempts for sabotage, which also has high interest for the operator of the computer network in order to protect the network and to identify the sabotage attempting person.

In another embodiment of the invention, the status probe is functionally connected to at least one of the following,
- means for measuring the temperature of the computer,
- means for measuring the temperature of the environment of the computer,
- means for measuring the humidity of the environment of the computer,
and wherein the status report implies at least one of the following,
- data indicative of the temperature of the computer,
- data indicative of the temperature of the surroundings of the computer,
- data indicative of the humidity of the environment of the computer,
- the functioning state of a components of the computer, the functioning state including the capability to run specific computer programs on the computer.

As already indicated, the term computer has to be understood broadly as any hardware device with computing properties capable of being programmed according to the invention. Included in the term computer are personal computers (PC), laptops, palm pilots, large computing devices, mail servers, internet servers, backup systems and other remote devices.

The mentioned network server need not be a single server but may be one or several of a plurality of collaborating servers. The evaluation system may be provided in a single server or in different collaborating servers, eventually with some parts of the invention in one server and other parts of the invention on other servers in collaboration.

The present invention can be realized in hardware, software, or a combination of hardware and software. Any kind of computer system or other apparatus adapted for carrying out the methods and/or functions described herein is suitable. A typical combination of hardware and software could be a general purpose computer system with a computer program that, when being loaded and executed, controls the computer system such that it carries out the methods described herein. The present invention can also be embedded in a computer program product, which comprises all the features enabling the implementation of the methods described herein, and which-when loaded in a computer system-is able to carry out these methods.

Computer program means or computer program in the present context include any expression, in any language, code or notation, of a set of instructions intended to cause a system having an information processing capability to perform a particular function either directly or after conversion to another language, code or notation, and/or reproduction in a different material form.

Thus, the invention includes an article of manufacture which comprises a computer usable medium having computer readable program code means embodied therein for causing a function described above. The computer readable program code means in the article of manufacture comprises computer readable program code means for causing a computer to effect the steps of a method of this invention. Similarly, the present invention may be implemented as a computer program product comprising a computer usable medium having computer readable program code means embodied therein for causing a function described above. The computer readable program code means in the computer program product comprising computer readable program code means for causing a computer to effect one or more functions of this invention. Furthermore, the present invention may be implemented as a program storage device readable by machine, tangibly embodying a program of instructions executable by the machine to perform method steps for causing one or more functions of this invention.

By providing the status probes and/or the evaluation system as computer code written software programs, a security system according to the invention can be established very cheaply in contrast to the case, where status probe and evaluation system is a programmed hardware solution. A possible embodiment of the software programs are computer codes that can be run on a Microsoft Windows® platform.

### SHORT DESCRIPTION OF THE DRAWINGS

The invention will be explained in more detail with reference to the drawing, where
- FIG. 1: illustrates the network used for the invention,
- FIG. 2: is a flow diagram illustrating the method according to the invention,
- FIG. 3: is a flow diagram illustrating the evaluation action,
- FIG. 4: is a flow diagram illustrating the message action.

### DETAILED DESCRIPTION / PREFERRED EMBODIMENT

A network 100 according to the invention may comprise a network server 101 - or several network servers 101 - and a plurality of remote devices 102, for simplicity in the following called by the general term computers. Computer 102 in this respect has to be understood as a broad term including personal computers (PC), laptops, palm pilots, large computing devices, mail servers, backup systems and other devices. Each computer 102 is provided with a status probe 112 in the form of a computer program running on the computer 102 for status reports on the state of components in the computer 102.

The network is controlled by the network server 101. Communication in the network may be by a Transmission Control Protocol/Internet Protocol (TCP/IP). The network server 101 has a microcontroller and a memory 107 and is equipped with a computer program as an evaluation system 111, which when run on the server 101 performs the tasks as described in the following as part of the invention.

The evaluation system 111 on the server 101 when running as a computer program is configured to receive status reports with data indicative of the state of the computers 102 or of components thereof. These data are evaluated on the basis of predetermined parameters stored in the memory of the server in order to reveal whether the monitored states are acceptable states or a failure state. If it turns out, that one or more of the computers 102 or their components are in a failure state, the evaluation system 111 attempts to send via modem 104 and mobile telephone network 105 a message to a predetermined mobile telephone 106. For example, such a message could be a text message reading "No status report from computer XXX". The person in charge, for example the network operator, networks administrator, or repair personnel, may read the message in the display 108 of the mobile telephone 106 and is thus informed and may take appropriate action.

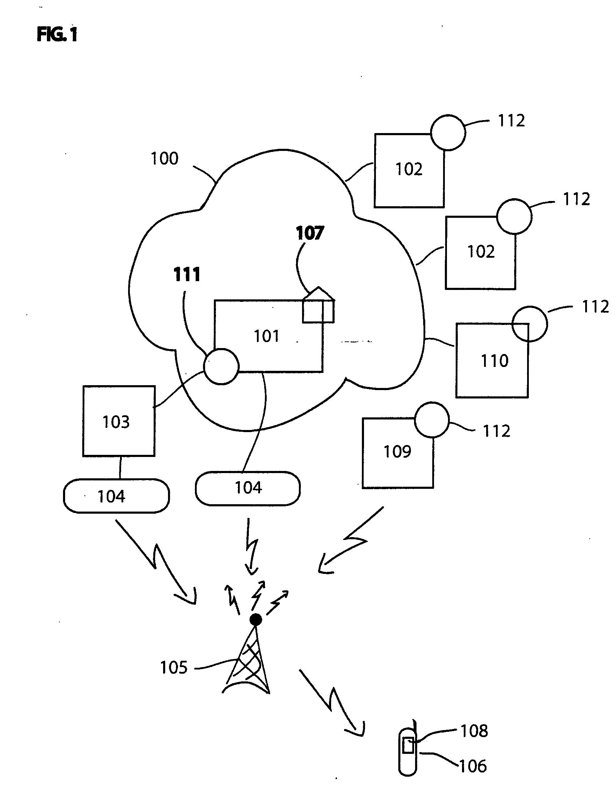

Functionally connected to the computer network is a control unit 103, which in FIG. 1 is shown as a stand alone device, but which may be incorporated in the network server 101 as a module with an own MAC (Media Access Control) address. In the preferred embodiment, the control unit 103 is a separate unit with an own IP (Internet Protocol) address and an own power supply, eventually a battery that starts functioning in case of a power cut.

The control unit 103 is further functionally connected to a modem 104' which is configured to connect to a mobile telephone network 105 in order to send a message to a mobile telephone 106. Instead of using the modem 104 directly connected to the server 101, the evaluation system 111 may use the modem 104' through the control unit 103, for example by instructing the control unit 103 to send an alarm message.

Using a control unit, running independently of the network server and with an own modem implies the advantage that a malfunctioning of the server may be reported even in the case, where the power system is subject to a major breakdown.

The control unit 103 has a microcontroller and a memory for storing data. The control unit 103 is configured to receive periodically a digital data signal indicative of the functioning of the server 101 or of components thereof. If this signal is not received, the control unit attempts to send via mobile telephone network 105 a message to a predetermined mobile telephone 106. For example, such a message could be a text message reading "No response from server". The person in charge, for example the network operator, networks administrator, or repair personnel, may read the message in the display 108 of the mobile telephone 106 and is thus informed and may take appropriate action.

In order to receive data indicative of the state of the network connected devices, 102, and their components, the evaluation system 111 may use polling requests such as the so called well known "PING". The network connected computers, 102 respond to the request as appropriate, for example, by describing a system configuration, capability and/or functional status, including check for memory as CMOS (Complementary Metal Oxide On Silicon) configuration, for PCI (Peripheral Component Interconnect) devices, for ISA (Industry Standard Architecture) devices, or other devices that can be included in or connected to the network 100. Included in such other devices are temperature or humidity sensors revealing the conditions of the devices in the network and their surroundings. The state of a device or a component, for example a hard disk or memory systems, is to be understood broadly in that the functioning of software components or software services is included within this term.

Preferably, status reports are reecived automatically without a polling request. The periods between the status reports may be configurable by commands sent from the evaluation system 111 to the status probes 112 in accordance with routines in the evaluation system programmed by for example by the administrative personnel.

The data memory 107 of the server is used for a variety of data. For example, log sequences may be stored such that the time of events can be analysed, which may be of special interest after a failure or a number of failures, especially if these occur repeatedly. Advantageously any action of the evaluation system 111 may be stored in a log file in the database 107. Also stored are data for the communication between the evaluation system 111 and the modem 104 and further the mobile telephone 106. In case that messages are received from the mobile telephone 106 either by the evaluation system 111 or by the control unit 103, these are stored in the data memory 107 of the server or in the data memory of the control unit as well, which is important, for example, for evaluation of response action taken by the person in charge with the telephone 106, and generally in case that messages are received from mobile telephones that are not authorised to deliver messages to the evaluation unit. The latter may be used as a means against eventual hackers that try to work their way into or through the network 100, for example in order to drain the network for information or for sabotage reasons.

The message send to the telephone 106 may be an SMS message containing an alphanumeric string. For MMS messages, images taken by a camera near the reporting device 102 and other multimedia information may be send. The latter may be of interest, for example, if an alarm message is received concerning too high humidity around a computer 102 or around the control unit 103, where the latter may be located in the same room as the server 101. Such a message could be send together with an electronic photo showing, whether there actually is water on the floor in a room where the server 101, the control unit 103 or the computer 102, is located - eventually due to a broken heating pipe in that room.

In case that the modem 104 or 104' does not work, the evaluation system 111 or the control unit 103, respectively, may send an alarm message to a further remote device 109 which may send the massage to the mobile telephone 106 through the mobile telephone network 105. Remote device 109 may also be equipped with a status probe according to the invention. Alternatively or additionally, the evaluation system 111 or the control unit 103 may send a message to an even further remote device 110 that may be accessible or even constantly under surveillance by second instance network administrative personnel and/or repair personnel. Such a remote device may also be equipped with a status probe 112 according to the invention.

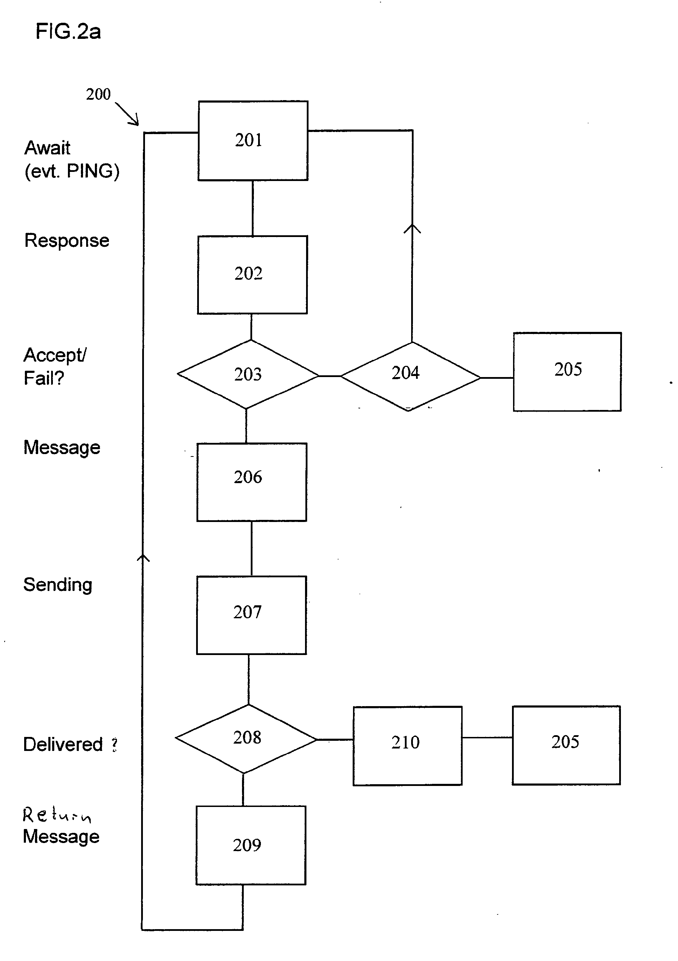

FIG. 2a illustrates one embodiment for the method 200 according to invention. The evaluation system is configured to await 201 periodical reports 202 form the status probes 112 with data indicative of the state of the computers 102 or components thereof. The reports may be responses due to a polling action, but it is preferred that the reports are sent automatically and periodically by the status probes 112.

The data responses are evaluated 203 in the evaluation unit 111, whether the states are acceptable states or failure states. In case that the states are acceptable states, a new status report is expexted after a certain time delay. As a routine check, the functioning of the modem 104, 104' is controlled 204, and an alarm is sent 205 to a second instance device 110 if the modem 104, 104' is not functioning correctly. If only the modem 104 connected to the server 101 is malfunctioning, a routine may be used to use the modem 104' connected to the control unit respectively. Such an functional interplay between the control unit 103 and the evaluation system 111 is foreseen by the invention.

In case that one or several of the reporting devices 102 have components that are in a failure state, a message action 206 is performed by the evaluation system 111, followed by sending the message 207 to the mobile telephone 106 and a check 208, whether the message could actually be delivered to the mobile telephone 106. If the message was delivered, the evaluation system 111 checks for an eventual return message and eventually recovery action 209 and goes back to the report expecting state. If the message was not delivered, a message delivery 210 through another remote device 109 is attempted and/or an alarm message is sent 205 to second instance device 110.

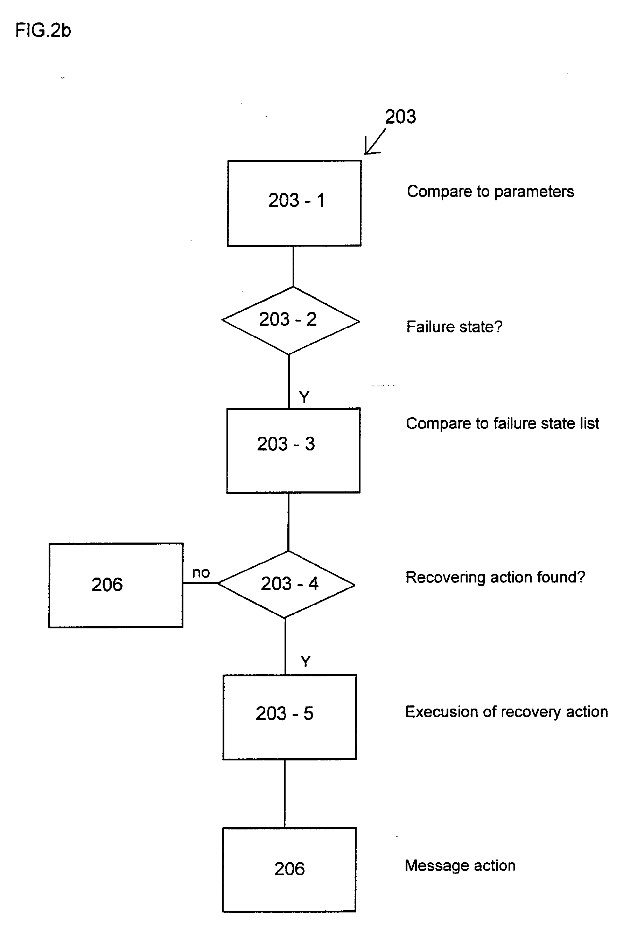

FIG. 2b describes the evaluation action 203 in more detail. The status report is evaluated by comparison 203-1 with stored parameters, which may include temperature ranges, humidity ranges, or simply the fact whether a status report has been received or not. The parameters are stored in a database 107 of the server 101. The evaluation may reveal a failure state or an acceptable state, where the acceptable state implies that the state is within acceptable parameter ranges, or simply that a report has been sent, while the failure state implies a state outside a range of parameters or a missing report. A missing report - or equivalently a missing response after a polling action - may indicate that a device or a component thereof is not functioning or that the device has been removed from the network 100, the removal eventually being unauthorised.

The evaluation action 203 may be extended to an evaluation and automatic failure correction action in the following way as indicated in FIG. 2b. After having determined 203-2 a response as indicating a failure state, the failure state may be compared 203-3 to a list of predetermined failure states, the list being stored in the memory 107. If for a failure state in the list, no possible correction action can be found, the message action according to FIG. 2a is executed. If a possible recovery action is found 203-4, it is automatically executed 203-5. For some failure states, more than one recovery action may be possible according to the list. However, in this case, the possible recovery actions have different priorities and are executed with regard to this priority. Independently of whether a failure state can or cannot be recovered to an acceptable state, a message action 206 is executed as also indicated in FIG. 2a.

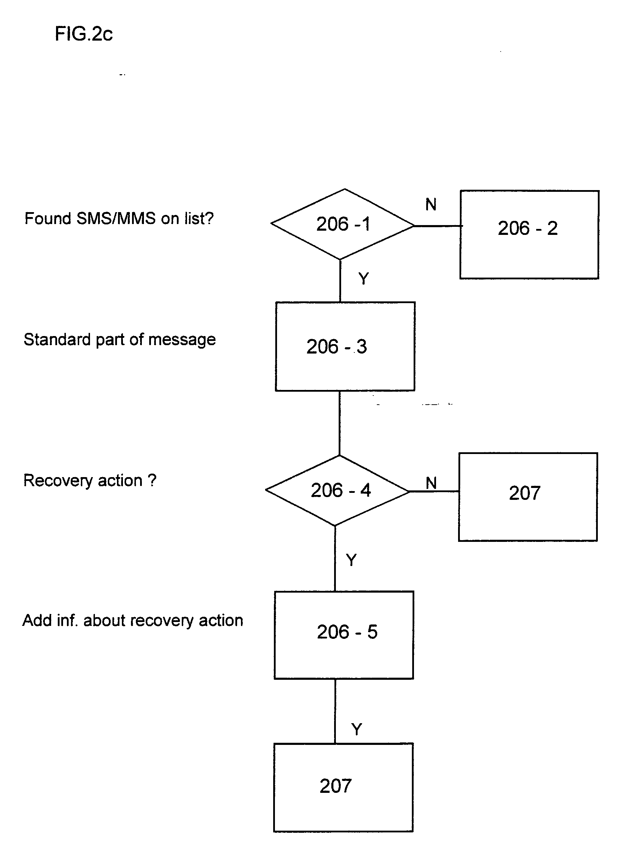

The message action 206 is described in more detail in FIG. 2c. In order to construct a message action, it is investigated, whether a corresponding SMS text or MMS multimedia clip can be found 206-1 from the database 107 according to a list of predetermined failure states. If no predetermined failure states can be found in the list which resembles the observed failure state, a standard message 206-2 may be used. If a predetermined failure state and corresponding message is found, this message is incorporated 206-3 in the final massage. Such a part of the final message may contain a failure code and a corresponding text string in a format equal to the format of error messages from the operating system. As a next step, it is evaluated 206-4, whether an automatic recovery action has been performed 203-5 as shown in FIG. 2b. If this is not the case, the message 206 may be sent as indicated with 207 in FIG. 2a. If this is the case, further text may be added 206-5 to explain which automatic recovery action been used and whether the recovery action has succeeded.

The recovery action 209 may be initiated by commands received from the mobile telephone 106. Preferably, it is checked, whether the recovery command can be accepted as an authorised command. For the authorisation, the senders telephone number is checked against a telephone list, but preferably, a password check is performed for highest security.

The programming of the evaluation system may optionally be performed from a network connected computer, for example via an Internet connection. The administrative interface for the evaluation system may then of html (HyperText Markup Language) format.

In the foregoing specification, the invention has been described with reference to specific embodiments thereof. It will, however, be evident that various modifications and changes may be made thereto without departing from the broader scope of the invention. The specification and drawings are, accordingly, to be regarded in an illustrative rather than a restrictive sense.

## Claims

1. Security system for a computer network, the network comprising a network server functionally connected to a plurality of computers, the security system comprising
- a status probe in each of at least one of the computers,
- an evaluation system provided in the network server,
- a modem connected to a telephone network and functionally coupled to the server,
wherein
- the status probe is programmed to provide status reports to the server in predetermined time intervals, the status reports containing digital data indicative of the states of selected components in the computer,
- the evaluation system is programmed to evaluate the received status reports in accordance with predetermined parameters, programmed to determine, whether any of the states of the selected components is in a failure state or in an acceptable state, and programmed to send a message to a telephone via the telephone modem in case that a component is in a failure state.

2. A security system according to claim 1, wherein the system comprises
- a control unit functionally coupled to the server and to the modem, wherein
- the server is programmed to send digital data signals in predetermined time interval to the control unit in order to confirm proper functioning of the server,
- the control unit is programmed to control, whether the digital data signals are received within the time intervals, and in case that a signal is not received, to send a message to a telephone via the telephone modem.

3. A security system according to claim 1 or 2, wherein the evaluation system is programmed, upon receipt of a status report indicating a failure state of a certain component, to compare the failure state with a list of possible known failure states with corresponding possible automatic recovery actions and in case that the failure state is equal to one or more of the predetermined failure states, to automatically select at least one possible recovery action for execution in order to change the failure state into an acceptable state.

4. A security system according to claim 3, wherein the selection of one recovery action in case that several possible recovery actions is made in accordance with a priority list.

5. A security system according to claim 3 or 4, wherein the evaluation system is programmed to check whether the recovery action has resulted in a change of the failure state to an acceptable state, and if this is not the case, to send an alert for the failure state in the message.

6. A security system according to claim 3, 4, or 5, wherein the evaluation system is programmed to send a recovery action report in the message if the recovery action has resulted in a change of the failure state to an acceptable state. (Status meddeles, men det er ikke nødvendigt for administratoren at tage telefonen).

7. A security system according to any claim 2-6, wherein the control unit is configured to send a message to a telephone via the telephone modem upon missing receipt of the digital data signal.

8. A security system according to claim 7, wherein the control unit is configured to automatically reboot the server.

9. A security system according to claim 8, wherein the control unit is functionally connected with a power source for the server and configured to interrupt the electrical power to the server for a certain time in order to reboot the server.

10. A security system according to any claim 1-9, wherein the evaluation system or the control unit or both of them are programmed to check whether a connection to the telephone network via the modem can be established and to send an alarm message to a selected remote device via the computer network in case that the modem is not working properly.

11. A security system according to any claim 1-10, wherein the telephone modem connected to a mobile telephone network and the telephone is a mobile telephone.

12. A security system according to claim 11, wherein the message is an SMS message or an MMS message.

13. A security system according to claim 12, wherein the evaluation system or the control unit or both of them are programmed to check for the receipt of a confirmation that the SMS or MMS message has been delivered to the mobile telephone and in case of missing confirmation, to send a message via the computer network to a selected remote electronic device connected to the computer network.

14. A security system according to any claim 1-13, wherein the message comprises a failure code and a corresponding text string in a format which is equal to the format of error messages from the operating system of the network server.

15. A security system according to any claim 1-14, wherein the evaluation system is programmed to be able to receive, after a reported failure state, an SMS or MMS message comprising commands for a recovery action.

16. A security system according to claim 15, wherein the evaluation system is programmed to execute the received command only if the sending mobile telephone reveals its telephone number as an authorised number.

17. A security system according to claim 15 or 16, wherein the evaluation system is programmed only to execute the received command if it is accompanied by a correct password.

18. A security system according to any claim 1-17, wherein the status probe is functionally connected to at least one of the following,
- means for measuring the temperature of the computer,
- means for measuring the temperature of the environment of the computer,
- means for measuring the humidity of the environment of the computer,
and wherein the status report implies at least one of the following,
- data indicative of the temperature of the computer,
- data indicative of the temperature of the surroundings of the computer,
- data indicative of the humidity of the environment of the computer,
- the functioning state of a components of the computer, the functioning state including the capability to run specific computer programs on the computer.

19. A security system according to any claim 1-18, wherein the status probe is a software program running on the computer.

20. A security system according to any claim 1-19, wherein the evaluation system is a software program running on the server.
